(19) Europäisches Patentamt
European Patent Office
Office européen des brevets

(11) **EP 2 525 200 B1**

(12) **FASCICULE DE BREVET EUROPEEN**

(45) Date de publication et mention
de la délivrance du brevet:
**08.07.2015 Bulletin 2015/28**

(51) Int Cl.:
***G01K 7/08*** *(2006.01)*    ***G02B 6/10*** *(2006.01)*

(21) Numéro de dépôt: **12168037.5**

(22) Date de dépôt: **15.05.2012**

(54) **Composant thermo électrique a guide plasmonique, integrant un dispositif de mesure de la puissance couplée dans le mode guide**

Thermoelektrische Komponente mit plasmonischer Führung, die eine Messvorrichtung der gekoppelten Leistung im geführten Modus umfasst

Thermoelectric component with plasmon waveguide, including a device for measuring power coupled into the guide mode

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.05.2011 FR 1154393**

(43) Date de publication de la demande:
**21.11.2012 Bulletin 2012/47**

(73) Titulaires:
• **Centre National de la Recherche Scientifique**
  **75016 Paris (FR)**
• **Université de Bourgogne**
  **21078 Dijon Cedex (FR)**

(72) Inventeurs:
• **Weeber, Jean-Claude**
  **21000 Dijon (FR)**

• **Dereux, Alain**
  **21490 Varois & Chaignot (FR)**

(74) Mandataire: **Henriot, Marie-Pierre et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**US-A- 5 792 667**

• **SERGEY I. BOZHEVOLNYI, THOMAS NIKOLAJSEN, KRISTJAN LEOSSON: "Integrated power monitor for long-range surface plasmon polaritons", OPTICS COMMUNICATIONS, vol. 255, novembre 2005 (2005-11), pages 51-56, XP002669882, DOI: 10.1016/j.optcom. 2005.05.035**

## Description

Le domaine de l'invention est celui des guides d'ondes plasmoniques. L'adjectif « plasmonique » fait référence ici au concept de plasmon polariton de surface, également abrégé en « plasmon de surface » dans la littérature.

Le développement d'une circuiterie optique intégrant des composants plasmoniques a motivé un grand nombre de travaux de recherches à l'échelle mondiale au cours de la dernière décennie. Dans ce contexte et au-delà des simples guides d'onde plasmoniques passifs, les sources plasmoniques intégrées et les détecteurs à plasmons intégrés ont un véritable intérêt pratique.

Très récemment, des détecteurs plasmoniques basés sur la détection d'un photocourant dans un semi-conducteur ont été décrits dans la littérature. Le guide plasmonique sert d'électrode pour la mesure du photocourant. De tels composants sont dédiés soit à des études de phénomènes d'optique quantique, soit à des applications d'optique intégrée assistée par plasmons.

A titre d'exemple, on peut citer un type de détecteur intégré à plasmons utilisant une barrière Schottky mais ce mode de détection est nécessairement limité à des modes plasmons guidés très atténués se propageant à l'interface entre un métal et un semi-conducteur. Un exemple d'un tel détecteur est décrit par A. Akbari, P. Berini, Appl. Phys. Lett., 95, 021104,(2009).

De plus, du point de vue d'un composant plasmonique, l'utilisation des semi-conducteurs impose des contraintes de fabrication draconiennes (compatibilité avec des processus de fabrication CMOS), un coût élevé et la nécessité de travailler sur substrats spécifiques.

Un autre type de dispositif reposant sur un effet thermo-résistif, permet de détecter la puissance se propageant le long d'un guide plasmonique. Un exemple de ce type de dispositif est présenté par S. Bozhevolnyi, T. Nikolajsen, K. Leosson , dans la publication « Integrated Power monitor for long range surface plasmon polaritons », Optics Communication, 255, 51, (2005). Un tel détecteur nécessite une longueur du guide d'onde suffisante pour permettre la détection d'une variation de la résistivité, ce qui rend difficile la miniaturisation du dispositif ; par ailleurs ces détecteurs présentent des temps de réponse élevés de l'ordre de la milliseconde.

La mesure de la puissance véhiculée par des modes plasmons non guidés peut toutefois être réalisée de façon simple et efficace grâce à une méthode thermoélectrique. La détection de la simple excitation d'un mode plasmon par un système thermoélectrique est par exemple décrit dans le brevet US 5,792,667 : il s'agit en l'occurrence de la détection de l'excitation d'un mode plasmon sur un film mince étendu pour lequel aucune notion de guidage du mode plasmon n'intervient. Il ne s'agit donc pas de la détection de la puissance se propageant le long d'un guide plasmonique, la notion de guidage comportant la notion de confinement latéral du mode plasmon. Il en est de même concernant la publication de R. A. Innes and J. R. Sambles, "Simple detection of surface plasmon-polaritons", Solid State Communications, 56,493,(1985). Dans ces deux exemples, la méthode thermoélectrique est mise en oeuvre pour mesurer la réflectivité optique du système intégrant une couche mince métallique étendue sur laquelle un plasmon de surface est excité et non pour obtenir une information sur une quelconque puissance associée à un mode guidé optique ou plasmonique.

Le but de l'invention est de pallier ces inconvénients.

La présente invention décrit un composant thermoélectrique intégrant :

- un guide d'onde supportant un mode plasmon, désigné par la suite comme guide plasmonique,
- un élément excitateur du mode plasmonique guidé, qui couple une puissance optique au guide plasmonique,
- un dispositif de mesure de la puissance optique dissipée lors de la propagation le long du guide plasmonique.

La mesure de puissance est fondée sur un effet thermoélectrique (connu aussi sous le nom d'effet Seebeck). Le signal thermoélectrique est obtenu grâce à une ou plusieurs jonctions thermocouple. Les jonctions thermocouple sont constituées de l'association de deux métaux ou de l'association d'un métal et d'un semi-conducteur. Dans les deux cas, le mode plasmon considéré se propage sous forme guidée le long d'une électrode métallique de telle sorte que le métal joue le double rôle de guide d'onde plasmonique et d'élément du dispositif de mesure.

Lors de sa propagation, un mode plasmon perd une partie de son énergie sous forme de pertes ohmiques provoquant l'échauffement du guide plasmonique et des milieux environnants. Cet échauffement est qualifié de résonant dans la suite. L'échauffement non résonant du composant désigne l'échauffement provoqué par tout phénomène autre que la seule absorption du mode plasmon guidé lors de son excitation et de sa propagation.

L'échauffement est détecté par la mesure de la différence de potentiel existant aux bornes de deux électrodes d'une jonction thermocouple donnée ou aux bornes de deux électrodes appartenant à des jonctions thermocouple différentes.

Lorsqu'un seul thermocouple est implémenté, la mesure est caractéristique de l'échauffement résultant de l'échauffement résonant et de l'échauffement non-résonant du composant.

Lorsque la différence de potentiel est mesurée entre des électrodes appartenant à des jonctions thermocouple différentes et moyennant un agencement précis des jonctions thermocouple et une procédure d'initialisation décrite plus bas, la tension électrique mesurée est caractéristique de la seule puissance véhiculée par le mode plasmon guidé et ne comporte pas de contribution issue d'un échauffement non-résonant du guide plasmonique. Une mesure absolue de la puissance utile sortant du guide plasmonique est alors possible après une procédure de calibration décrite plus bas.

Plus précisément l'invention a pour objet un composant thermo-électrique qui comprend intégrés au composant :

- un guide d'onde plasmonique,
- un élément excitateur du mode plasmonique guidé.
- un dispositif de mesure de la puissance dissipée lors de la propagation le long du guide d'onde plasmonique.

Il est principalement caractérisé en ce que le dispositif de mesure comporte associée au guide plasmonique, une jonction thermocouple à deux électrodes, l'une des électrodes incluant le guide d'onde plasmonique.

Avec ce composant, le signal utile est sans source d'énergie extérieure pour produire le signal utile puisque la tension thermocouple résulte des propriétés intrinsèques (en l'occurrence des coefficients Seebeck différents) des matériaux composant la jonction thermocouple. Cette caractéristique distingue le composant décrit ici des dispositifs de l'état de la technique pour lesquels, le signal utile est obtenu moyennant l'utilisation d'une source de tension aussi bien dans le cas des dispositifs thermo-résistifs que pour les détecteurs à semi-conducteurs.

Selon une caractéristique de l'invention, le guide d'onde plasmonique est un résonateur en anneau, et l'élément excitateur est un guide d'onde plasmonique ou un guide d'onde conventionnel.

Selon une autre caractéristique de l'invention, le composant thermoélectrique comprend un deuxième guide plasmonique et une deuxième jonction thermocouple à deux électrodes, l'une des électrodes de cette deuxième jonction incluant le deuxième guide d'onde plasmonique, le premier guide plasmonique étant disposé sur une branche d'une jonction Y, le deuxième guide plasmonique étant disposé sur l'autre branche de la jonction Y.

Le composant selon l'invention repose avantageusement sur une disposition particulière des jonctions thermocouple permettant de sélectionner le signal thermoélectrique provenant exclusivement de l'échauffement résonant résultant de l'absorption du mode plasmon. Ce dispositif permet la mesure de la puissance plasmon guidée sans prélèvement de puissance utile et autorise en outre la détection du mode plasmon dans une zone de l'espace où son amplitude peut être négligeable. Le composant peut être mis en oeuvre en régime stationnaire ou en régime dépendant du temps. Des temps de réponse inférieurs à $10\mu s$ sont accessibles.

De préférence, le composant thermoélectrique comporte une deuxième jonction thermocouple à deux électrodes, associée au même guide plasmonique, l'une de ces électrodes étant commune à la première jonction thermocouple et incluant le guide d'onde plasmonique, la première jonction dite jonction chaude étant destinée à être sur le trajet du mode guidé plasmonique. La deuxième jonction dite jonction froide étant située en dehors du trajet du mode plasmon guidé.

Cette configuration offre une solution pour extraire un signal caractéristique de la puissance plasmon seule en s'affranchissant de toute autre forme d'échauffement du guide. Ce raffinement n'est pas possible avec la configuration thermo-résistive de l'état de la technique cité en préambule.

Elle permet en outre une miniaturisation à l'extrême du composant puisque la jonction thermocouple peut dans certains cas être limitée à une surface de quelques centaines de nanomètres carrés ($nm^2$).

Un composant optique excité par le guide peut aussi être intégré au composant thermoélectrique.

L'électrode incluant le guide plasmonique est avantageusement métallique.

Selon une variante, l'élément excitateur du mode guidé comprend des moyens de contrôle de sa polarisation.

Cet élément excitateur du mode guidé est par exemple un guide d'onde optique plasmonique ou conventionnel (diélectrique), couplé au guide plasmonique par couplage de type « butt-coupling » ou par couplage directionnel dans le plan, ou par couplage directionnel vertical, le guide d'onde excitateur étant enterré dans un substrat.

Cet élément excitateur du mode guidé peut aussi être un micro réseau de diffraction dont les traits sont perpendiculaires à l'axe longitudinal du guide plasmonique, ce réseau étant destiné à être couplé à un faisceau laser en incidence oblique ; le micro-réseau de diffraction provoque l'excitation unidirectionnelle du mode plasmon guidé.

Selon une caractéristique de l'invention, le micro réseau est situé sur le guide plasmonique à égale distance des jonctions chaude et froide, et le dispositif de mesure ne comporte qu'un seul dispositif de détection de faible différences de potentiel.

Cet élément excitateur du mode guidé peut être situé à une extrémité du guide et être un micro réseau dont les traits sont perpendiculaires à l'axe longitudinal du guide et destiné à être couplé à un faisceau laser focalisé, en incidence normale sur le micro réseau, la deuxième partie de l'électrode étant disposée selon une direction dans laquelle le micro réseau n'a aucune efficacité de couplage.

Cet élément excitateur du mode guidé peut aussi être un faisceau laser focalisé en incidence oblique surcritique à travers un substrat transparent.

Selon une autre variante, l'élément excitateur du mode guidé ne comprend pas de moyens de contrôle de sa polarisation.

Dans ce cas, le composant thermoélectrique comprend un élément chauffant situé à l'entrée du guide plasmonique.

Cet élément chauffant est par exemple un élément Pelletier, ou un ruban métallique de largeur micronique ou un faisceau de lumière incidente focalisé.

Dans certains cas, le dispositif de mesure de puissance comporte un dispositif de détection de faible différences de potentiel par jonction thermocouple et relié à ces deux dispositifs, un circuit de traitement des différences de potentiel obtenues.

On peut compléter l'élément excitateur par des moyens de modulation.

L'invention concerne également un procédé d'utilisation d'un composant thermoélectrique tel que décrit, caractérisé en ce qu'il comprend une étape d'initialisation du dispositif de mesure par un échauffement non résonant du guide plasmonique.

Il comporte suite à l'étape d'initialisation, une étape d'excitation d'un mode guidé dans le guide plasmonique.

Eventuellement, il comporte entre l'étape d'initialisation et l'étape d'excitation, une étape de calibration du dispositif de mesure.

Dans certains cas, l'étape d'initialisation est réalisée dans une plage de températures déterminée, et l'étape d'excitation du mode guidé est réalisée pour une température comprise dans ladite plage de températures.

D'autres caractéristiques et avantages de l'invention apparaîtront à la lecture de la description détaillée qui suit, faite à titre d'exemple non limitatif et en référence aux dessins annexés dans lesquels :

la figure 1a représente schématiquement un exemple de mode de réalisation de l'invention à une seule jonction thermocouple, vu de dessus,

la figure 1b représente schématiquement un exemple de mode de réalisation d'un détecteur de résonance d'un résonateur en anneau à une seule jonction thermocouple, vu de dessus,

la figure 1c représente schématiquement un exemple de mode de réalisation d'une jonction Y à deux guides plasmoniques et deux jonctions thermocouple, vu de dessus,

la figure 2a représente schématiquement un exemple de mode de réalisation de l'invention à deux jonctions thermocouple associées à un seul guide plasmonique, vu de dessus,

les figures 2b représentent schématiquement un autre exemple de mode de réalisation de l'invention à deux jonctions thermocouple associées à un seul guide plasmonique, avec un élément excitateur comportant un micro-réseau et un spot incident en incidence oblique, vu de dessus (fig $2b_1$) vu de profil (fig $2b_2$),

les figures 2c représentent schématiquement un troisième exemple de mode de réalisation de l'invention à deux jonctions thermocouple associées à un seul guide plasmonique, avec un élément excitateur comportant un spot incident en incidence sur-critique, au travers d'un substrat transparent, vu de dessus (fig $2c_1$) vu de profil (fig $2c_2$),

la figure 2d représente schématiquement un quatrième exemple de mode de réalisation de l'invention à deux jonctions thermocouple associées à un seul guide plasmonique, avec un élément excitateur comportant un micro-réseau et un spot incident en incidence normale, vu de dessus,

la figure $2e_1$ illustre plusieurs modes d'excitation du guide plasmonique par un guide d'onde,

la figure $2e_2$ présente différentes configurations de guides d'onde plasmonique à ruban, vus en coupe,

la figure 3a représente schématiquement un exemple de mode de réalisation de l'invention à deux jonctions thermocouple associées à un seul guide plasmonique, avec un dispositif chauffant, vu de dessus,

la figure 3b représente schématiquement un autre exemple de mode de réalisation de l'invention à deux jonctions thermocouple associées à un seul guide plasmonique, avec un dispositif chauffant, vu de dessus,

la figure 4a illustre l'évolution de la tension $V_{Ni-Ni}$ en fonction de la polarisation incidente contrôlée par l'angle $\alpha$ de la lame demi-onde, et la figure 4b celle de la tension $V_{Ni-Ni}$ en fonction de l'angle d'incidence,

la figure 5 illustre l'évolution de la tension $V_{Ni-Ni}$ en fonction de la puissance réfléchie $P_{ret}$,

la figure 6 montre trois courbes représentées en fonction du temps, celle d'une impulsion, celle de la tension $V_{Ni-Ni}$ et celle de la variation de température entre la jonction chaude et la jonction froide.

D'une figure à l'autre, les mêmes éléments sont repérés par les mêmes références.

Le composant thermoélectrique comprend, intégrés au composant :

- un guide d'onde plasmonique,
- un élément excitateur du mode plasmonique guidé,
- un dispositif de mesure de la puissance dissipée lors de la propagation dans le guide d'onde plasmonique.

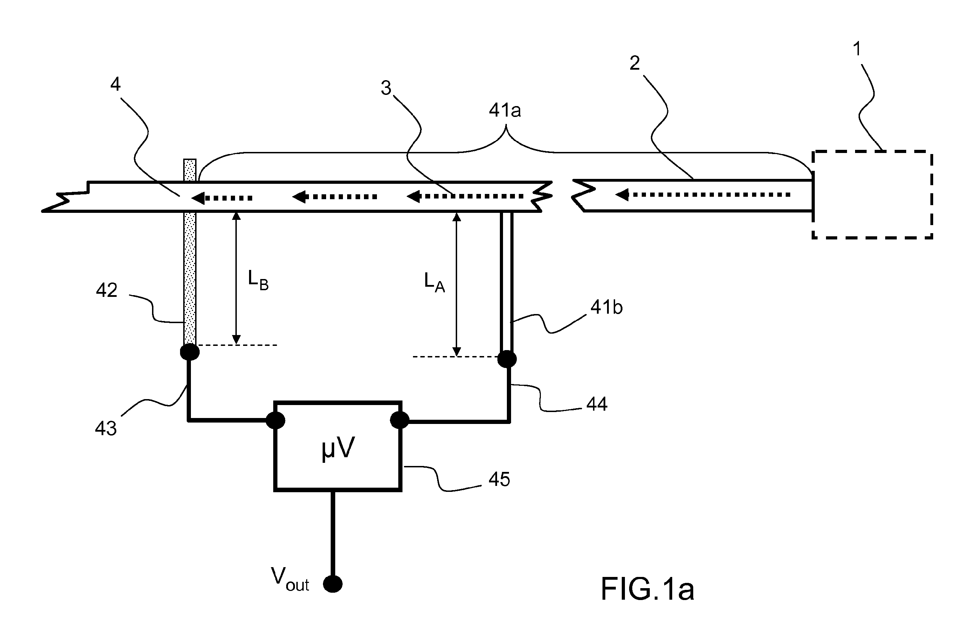

Selon un premier mode de réalisation de l'invention décrit en relation avec la figure 1a, le dispositif de mesure comporte une seule jonction thermocouple à deux électrodes, associée au guide plasmonique, l'une des électrodes incluant le guide d'onde plasmonique.

Ce composant permet d'effectuer la seule mesure de l'échauffement du guide plasmonique sans qu'il soit possible de séparer dans cette mesure la contribution de l'échauffement résonant et non-résonant.

La mesure repose sur l'approche suivante. L'élément excitateur 1 excite le guide plasmonique 2. Une fraction de la puissance lumineuse délivrée par l'élément excitateur est absorbée par le guide plasmonique sans que cette absorption soit liée à l'excitation du mode plasmon. Cet échauffement est donc qualifié de non-résonant. Une partie de la puissance lumineuse délivrée par l'élément excitateur se couple au mode plasmon 3.

Ce mode qui se propage le long du guide perd une partie de son énergie sous forme de chaleur, celle-ci provoquant l'échauffement résonant du guide. Ces deux types d'échauffement engendrent une différence de potentiel aux bornes de la jonction thermocouple 4. Cette jonction thermocouple 4 comporte deux électrodes de nature différentes (deux métaux différents, ou un métal un semi-conducteur...). Une électrode 41 dans un matériau A est composée de deux parties, une partie 41a étant le guide 2, et une autre partie 41 b dans laquelle aucun mode guidé ne se propage. La continuité électrique entre la partie 41 a c'est-à-dire le guide 2, et la partie 41 b de l'électrode 41 doit être assurée. Dans l'idéal, la partie 41 b est constituée du même matériau que la partie 41 a, en l'occurrence le matériau A mais elle peut être dans un matériau différent. L'autre électrode 42 dans un matériau B est connectée au guide plasmonique c'est-à-dire à la partie 41 a de l'électrode.

Les électrodes 41 b, 42 de la jonction thermocouple sont connectées au dispositif 45 de détection des faibles tensions par des connexions électriques 43, 44 composées d'un matériau pouvant être différent des matériaux A ou B. Les connexions électriques entre le dispositif 45 de détection des faibles tensions et l'électrode 42, ou entre le dispositif 45 de détection des faibles tensions et l'électrode 41 b ne sont pas nécessairement constituées du même matériau. On désigne $L_B$ la longueur de l'électrode 42 égale à la distance entre le guide plasmonique 2 et la connexion électrique 43, et LA la longueur de l'électrode 41 b égale à la distance entre le guide plasmonique 2 et la connexion électrique 44. Afin d'éviter un effet thermocouple au niveau des jonctions électriques avec les électrodes 41, 42, on choisit de préférence les distances $L_B$ et LA assez grandes (typiquement une centaine de microns) pour que la température au niveau des jonctions électriques soit égale à la température ambiante. Ceci est également valable pour les différents modes de réalisation décrits dans la suite.

Le signal utile $V_{out}$ est obtenu par l'intermédiaire d'un dispositif de détection des tensions faibles 45 pouvant être un microvoltmètre, un amplificateur différentiel, etc, délivrant un signal proportionnel à la différence de potentiel entre l'électrode 41 et l'électrode 42.

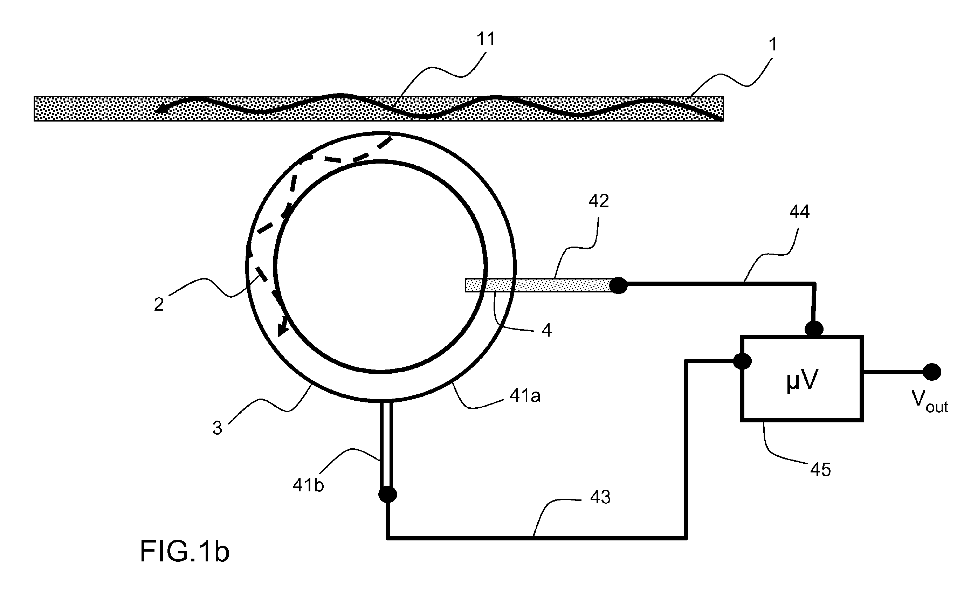

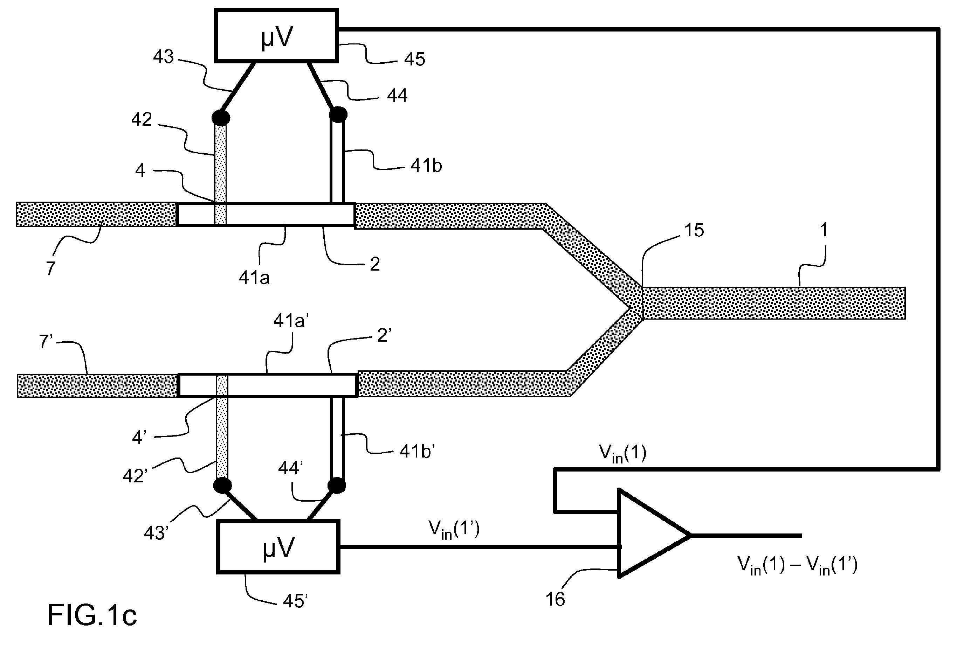

Ce mode de réalisation est par exemple appliqué à un détecteur de résonance dont un exemple est représenté figure 1 b.

Un élément excitateur 1, ici un guide bus 1 plasmonique ou conventionnel, dans lequel un mode guidé 11 se propage, permet d'exciter un guide plasmonique 2, en l'occurrence un résonateur plasmonique par exemple en anneau ou linéaire selon une configuration de type Fabry-Pérot sur une gamme de longueur d'onde étendue. Pour une longueur d'onde vérifiant la condition de résonance du résonateur 2, l'énergie s'accumule dans le résonateur 2. Du fait des pertes ohmiques du mode plasmon guidé 3, cette accumulation d'énergie s'accompagne d'un échauffement du résonateur détecté par la jonction thermocouple 4 et par le dispositif de détection des tensions faibles 45. Ainsi, la résonance du résonateur se manifeste-t-elle par une augmentation de la valeur absolue de la tension thermocouple. Les deux électrodes de la jonction thermocouple 4 sont d'une part l'électrode 42 dans un matériau B, d'autre part l'électrode 41 dans un matériau A, en deux parties, la partie 41 a constituée par le résonateur 2 et la partie 41 b dans laquelle le mode guidé ne circule pas. La géométrie de la jonction thermocouple 4 de la figure, représentée par l'intersection d'un ruban (électrode 42) et de l'anneau du résonateur n'est qu'indicative ; l'efficacité de la détection est d'autant plus grande que la jonction thermocouple est distribuée sur toute la surface du résonateur, c'est-à-dire lorsque l'électrode 42 comporte deux parties, un segment droit (la référence 42 sur la figure) et une partie en anneau (le résonateur 2).

Un autre exemple d'application de ce premier mode de réalisation, décrit en relation avec la figure 1c est la détection d'un déséquilibre dans une jonction Y, chaque branche de la jonction Y comportant un composant selon ce premier mode de réalisation qui intègre un guide de sortie plasmonique ou conventionnel 7, 7'.

Ce second exemple montre un système comportant un élément excitateur 1 (par exemple un guide d'onde plasmonique ou conventionnel) qui se sépare au moyen d'un séparateur 15 en deux branches, deux jonctions thermocouple 4 et 4' mais aussi deux guides plasmoniques 2 et 2'. On a donc bien une jonction thermocouple par guide plasmonique et on se situe donc bien dans le contexte d'une simple mesure de l'échauffement de chaque guide plasmonique. La tension $V_{in}(1)$ est produite par la jonction thermocouple 4 dont les deux électrodes sont d'une part une électrode 42 dans un matériau B et une électrode dans un matériau A, en deux parties, une partie 41 a qui est le guide 2 et une partie 41 b dans laquelle le mode ne circule pas. La tension $V_{in}(1')$ est produite par la jonction thermocouple 4' avec deux électrodes 42' d'une part et 41a'-41b' d'autre part. Chacune de ces deux tensions est caractéristique de l'échauffement des guides plasmoniques 2 et 2' et donc de la puissance se propageant dans chaque branche du séparateur de faisceau. Le signal $V_{in}(1)-V_{in}(1')$ mesuré par le dispositif 16 est donc caractéristique de la différence de puissance se propageant dans chaque branche du séparateur. Là encore, la géométrie des jonctions thermocouple peut être différente. En particulier, on peut considérer une configuration où le matériau B des électrodes 41 b et 41 b' s'étend sur toute la longueur des guides plasmoniques 2 et 2'.

Comme on vient de le voir, l'excitation d'un mode guidé dans le guide plasmonique provoque un échauffement non résonant inévitable résultant de la simple absorption de la lumière incidente (provenant d'un guide d'onde ou d'un spot de lumière focalisé) sans excitation plasmon associée et d'autre part un échauffement résonant produit par l'absorption du mode plasmon au cours de sa propagation ; mais on ne connaît pas les contributions respectives de ces deux échauffements.

La mesure relative de la puissance véhiculée par le mode plasmon guidée, par effet thermoélectrique n'est possible qu'à la condition de pouvoir séparer les deux contributions provoquant l'échauffement des guides plasmoniques : d'une part l'échauffement résonant et d'autre part l'échauffement non résonant. Par mesure relative on entend ici la détection d'un signal thermoélectrique variant proportionnellement à la puissance véhiculée par le mode plasmon sans qu'il soit pour autant possible d'attribuer une valeur de puissance guidée (en Watt) à la valeur de la différence de potentiel thermocouple mesurée (en Volt). On note cependant que la mesure absolue de la puissance véhiculée par le mode plasmon est possible au prix d'une procédure de calibration permettant de corréler la valeur de la tension thermocouple caractérisant le seul échauffement résonant du guide à une valeur de puissance parvenant à l'extrémité du guide plasmonique. La procédure de calibration utilise par exemple une photodiode intégrée à l'extrémité du guide plasmonique. Cette photodiode jouant alors le rôle du composant optique excité noté 7 sur les différentes figures. Pour un type de guide plasmonique donné et une configuration des jonctions thermocouple déterminée, cette procédure de calibration permet d'établir une corrélation entre une valeur de tension thermocouple (en Volt) caractérisant le seul échauffement résonant du guide plasmonique et une valeur de la puissance transmise le long du guide plasmonique (en Watt). Ainsi pour une configuration de détection identique à celle pour laquelle la procédure de calibration aura été réalisée, la seule valeur de la tension thermocouple caractérisant l'échauffement résonant du guide permet de déduire la puissance (en Watt) parvenant à l'extrémité du guide plasmonique. La détection d'une tension thermocouple caractérisant le seul échauffement résonant du guide impose une procédure d'initialisation décrite ci-dessous et donnant accès à une mesure relative de la puissance véhiculée par le guide plasmonique.

On décrit ici une réalisation de l'invention permettant d'obtenir la mesure relative de la puissance véhiculée par le mode plasmon. Cette approche s'applique notamment à des configurations de composant thermoélectrique intégrant en outre un composant optique excité par le mode guidé se propageant dans le guide plasmonique ; ce composant est typiquement un guide d'onde diélectrique, plasmonique ou autre. Cela est rendu possible par le fait que la mesure relative de la puissance véhiculée par le mode plasmon est réalisée sans prélèvement de puissance utile.

Selon ce mode de réalisation, le dispositif de mesure comporte deux jonctions thermocouple 4, 5 à deux électrodes, chaque jonction étant associée au même guide plasmonique 2, et ces deux jonctions partageant une même électrode, celle qui inclut le guide d'onde plasmonique. La procédure de mesure de la puissance du mode plasmon guidé comprend alors deux étapes : une étape d'initialisation consistant à éliminer du signal thermoélectrique la contribution de l'échauffement non-résonant puis une étape de mesure de l'échauffement résonant pouvant être attribué à l'absorption de la puissance véhiculée par le mode plasmon. Il n'est pas indispensable de procéder à une initialisation à chaque fois qu'on réalise l'étape de mesure ; l'initialisation reste valable pour plusieurs mesures.

La séparation des deux contributions (échauffement non-résonant et échauffement résonant) peut être réalisée de plusieurs façons selon que la polarisation de la source de lumière permettant l'excitation du mode plasmon peut être contrôlée de telle sorte à interdire ou non cette excitation.

Selon une première variante, on peut contrôler la polarisation de l'élément excitateur et ainsi la choisir de sorte que le mode plasmon guidé 3 soit excité ou non.

La procédure de mesure relative de la puissance du mode plasmon guidé dans ce cas est la suivante.

Lors de l'étape d'initialisation, la polarisation est tout d'abord ajustée de telle sorte que le champ électrique incident ne permette pas l'excitation d'un mode plasmon guidé, c'est-à-dire soit dépourvu de composante permettant l'excitation du mode plasmon guidé 3. Le plus souvent, cette situation est obtenue pour une polarisation transverse électrique TE, toutefois pour certains guides d'ondes plasmonique particuliers supportant des « channel plasmon polariton » par exemple c'est la polarisation TM qui devrait être choisie à ce stade. Dans cette configuration, l'échauffement du guide plasmonique 2 est provoqué par l'absorption de la lumière incidente sans que cet échauffement ne soit lié à l'excitation du mode plasmon 3. Il s'agit donc d'un échauffement non-résonant. Cette procédure d'initialisation a pour but d'établir une correction des tensions thermocouple mesurées afin de séparer la contribution de l'échauffement résonant et non-résonant du guide plasmonique.

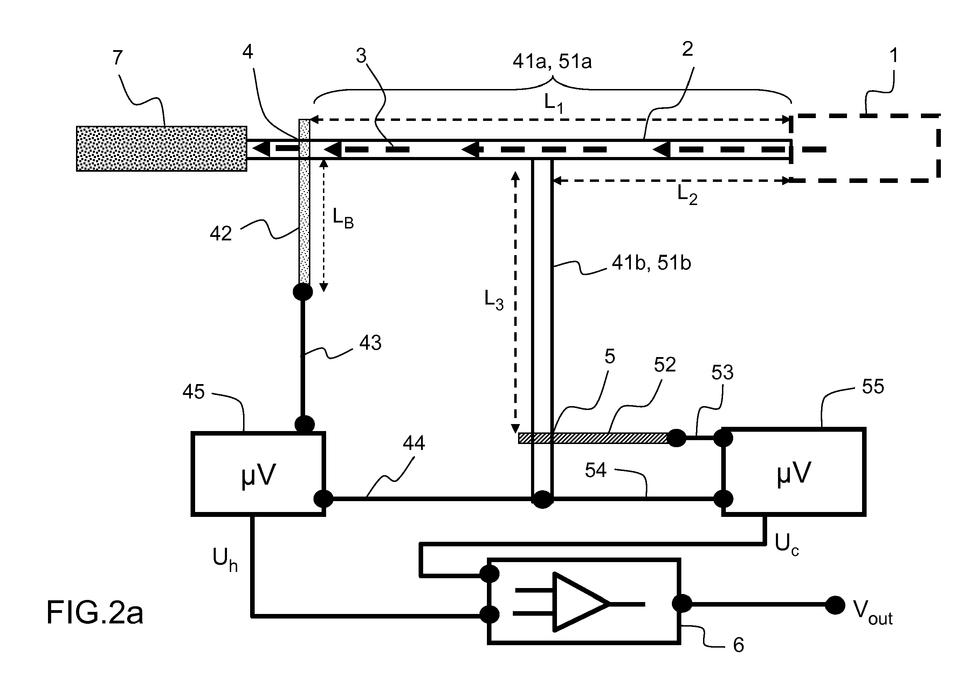

Selon un premier mode de réalisation de cette variante décrit en relation avec la figure 2a, le dispositif de mesure comporte deux dispositifs 45, 55 de détection des tensions faibles qui permettent de mesurer les tensions $U_h$ et $U_c$ aux bornes des jonctions thermocouple chaude 4 et froide 5 respectivement, et un circuit 6 intégré de traitement des tensions $U_h$ et $U_c$ auquel sont reliés les deux dispositifs de détection des tensions faibles.

A titre indicatif, le circuit 6 de traitement des tensions peut être un circuit réalisant l'opération $V_{out}=U_h-aU_c+V_{offset}$ avec a un coefficient d'amplification et $V_{offset}$ un décalage de tension pouvant être positif ou négatif.

**EP 2 525 200 B1**

La jonction thermocouple 4 est dite chaude car elle est sur le trajet du mode guidé 3, la jonction thermocouple 5 étant dite froide car elle n'est pas sur le trajet du mode guidé 3. Les deux électrodes de la jonction thermocouple 4 sont d'une part l'électrode 42 dans un matériau B, et d'autre part l'électrode 41 dans un matériau A en deux parties. L'électrode 42 est connectée au guide 2 et à une connexion électrique 43 reliée au dispositif 45 ; l'électrode 41 en deux parties 41 a qui est le guide 2 et 41 b dans laquelle le mode plasmon ne circule pas, cette partie 41 b étant connectée au dispositif 55 par une connexion électrique 44. Les deux électrodes de la jonction thermocouple 5 sont d'une part l'électrode 52 dans un matériau D, et d'autre part l'électrode 51 dans un matériau A en deux parties. L'électrode 52 est connectée au guide 2 et à une connexion électrique 53 reliée au dispositif 55 ; de préférence le matériau D est le même que le matériau B. L'électrode 51 est commune à la jonction thermocouple 4 ; c'est pourquoi les références 51 a, 51 b désignent les mêmes éléments que les références 41 a et 41 b. La partie 51 b (=41 b) est connectée au dispositif 55 par une connexion électrique 54.

L'initialisation du dispositif de mesure de puissance consiste à déterminer la loi qui lie les tensions $U_h$ et $U_c$ lorsque l'échauffement du guide plasmonique est purement non-résonant (donc en absence de mode plasmon guidé). Cette loi doit être obtenue sur une plage de puissances non-résonantes qui contient la valeur estimée de l'échauffement non-résonant lors de l'excitation du mode plasmon.

Plus précisément, on débute la procédure d'initialisation par l'enregistrement des tensions $U_h$ et $U_c$ pour des puissances non-résonantes variant entre 0 et $P_{nr}(max)$. Ainsi on détermine une loi $f_h$ et $f_c$ pour chacune des tensions sous la forme $U_h=f_h(P_{nr})$ et $U_c=f_c(P_{nr})$. Connaissant ces deux lois, on peut facilement déterminer la loi g telle que $U_h-g(U_c)=0$ pour toutes les valeurs de $P_{nr}$ variant entre 0 et $P_{nr}(max)$. A titre indicatif, cette loi pourrait être simplement linéaire et caractérisée par les coefficients a et $V_{offset}$ comme décrit précédemment. Cette loi g étant déterminée, on peut passer à l'étape suivante en modifiant la polarisation de façon que le mode plasmon guidé soit effectivement excité pour pouvoir alors mesurer la puissance en présence du mode plasmon guidé. Dans ce cas les tensions $U_h$ et $U_c$ peuvent encore se noter sous la forme $U_h=U_{hspp}+U_{hnr}$ et $U_c=U_{cspp}+U_{cnr}$ où les contributions $U_{xspp}$ et $U_{xnr}$ (avec x=h ou c) sont respectivement liées à l'échauffement résonant (« spp » étant l'acronyme de l'expression anglo-saxonne « Surface Plasmon Polariton ») et non-résonant. Les valeurs relatives de chacune de ces tensions sont inconnues ; toutefois si on applique la loi de correction g on a :

$$U_h-g(U_c)=U_{hnr}+U_{hspp}-g(U_{cnr}+U_{cspp})=U_{hspp}-g(U_{cspp})+U_{hnr}-g(U_{cnr}).$$

Or grâce à l'initialisation non-résonante obtenue à l'aide de l'ajustement réalisé par le circuit, on a $U_{hnr}-g(U_{cnr})=0$ et ceci uniquement pour les contributions non-résonantes. En effet, pour les contributions résonantes, on attend une distribution de température différente du cas non-résonant en raison de la présence du mode plasmon guidé. Il en résulte que la différence de tension $U_h-g(U_c)=U_{hspp}-g(U_{cspp})$ est spécifique du mode plasmon guidé. Le signal thermoélectrique ainsi obtenu est donc bien caractéristique de la puissance absorbée au cours de la propagation du mode plasmon. Cette configuration est d'autant plus performante que les tensions $U_{hspp}$ et $U_{cspp}$ sont aussi différentes que possible. Ceci se produit à la condition que $L_2$ soit aussi faible que possible.

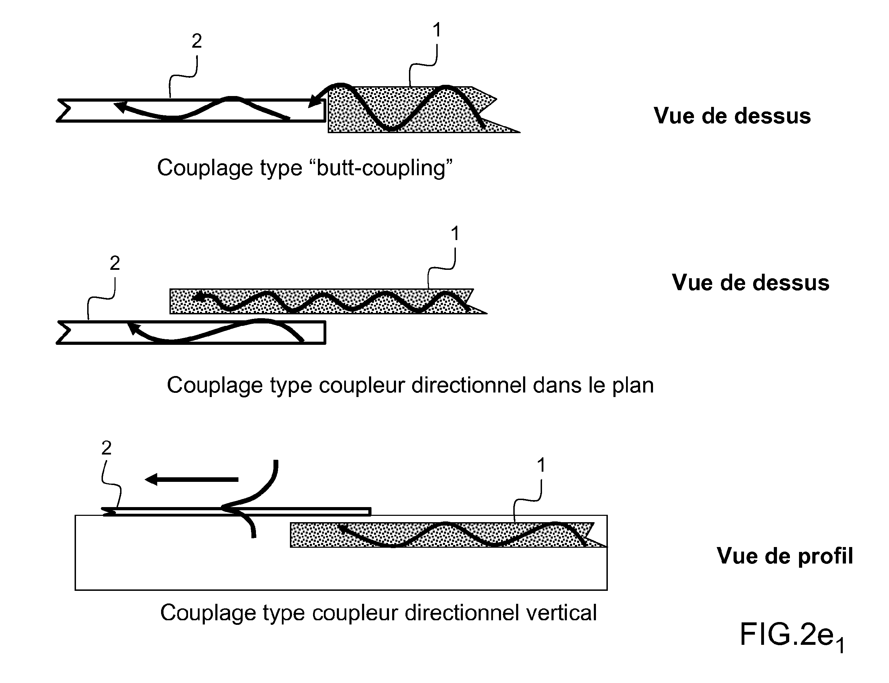

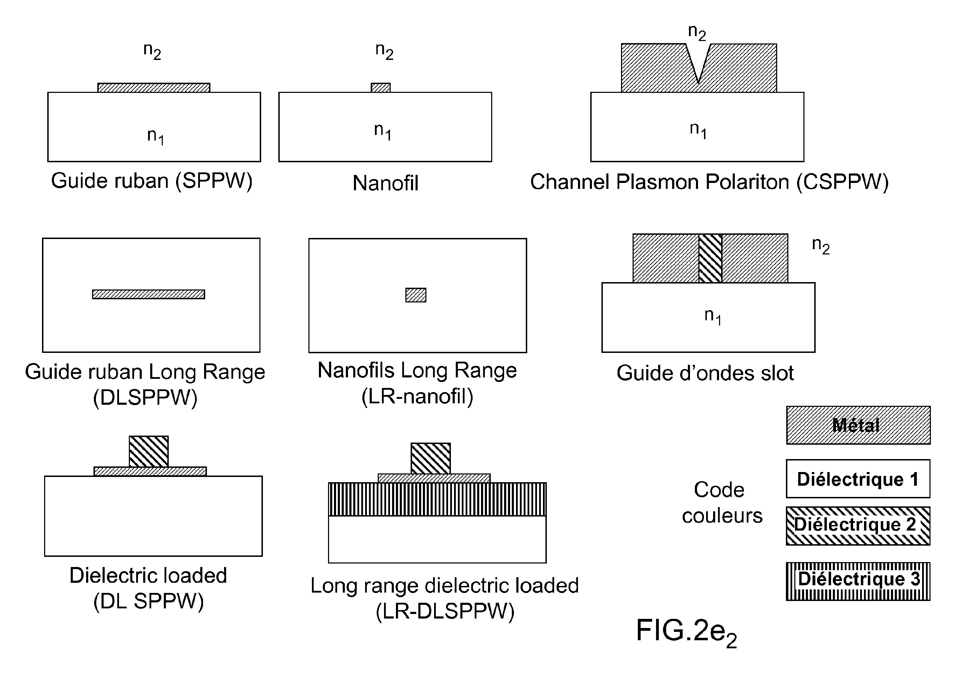

On a illustré figure 2e$_1$ différents types d'excitation du guide plasmonique 2 par un guide d'onde 1 selon un :

- couplage de type « butt-coupling », le guide 2 étant dans le prolongement du guide 2,
- couplage de type coupleur directionnel dans le plan, le guide 1 étant en partie sur le côté du guide 2,
- couplage de type coupleur directionnel vertical, le guide 1 étant un guide enterré dans un substrat transparent sur lequel est déposé le guide plasmonique 2 qui chevauche en partie le guide 1.

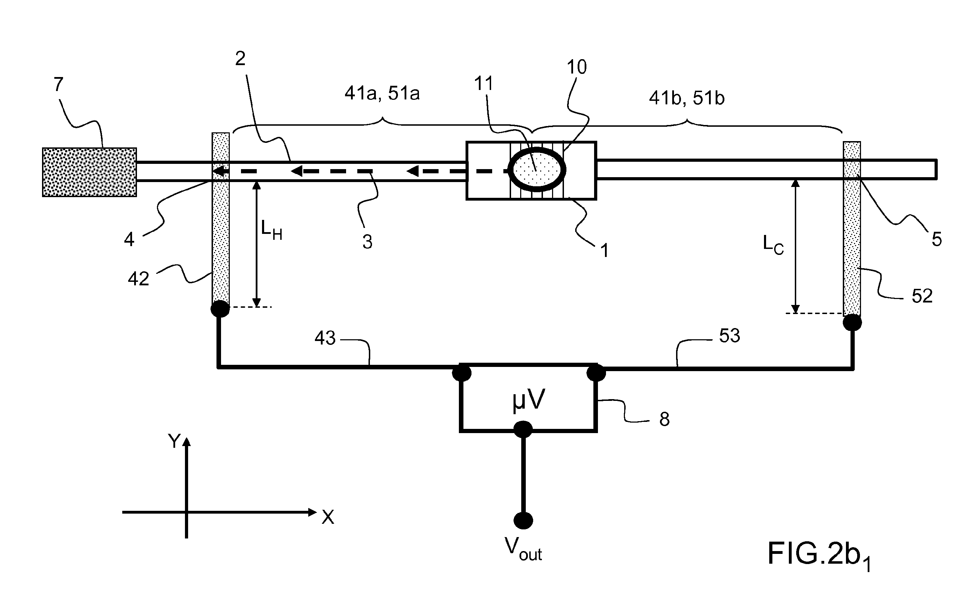

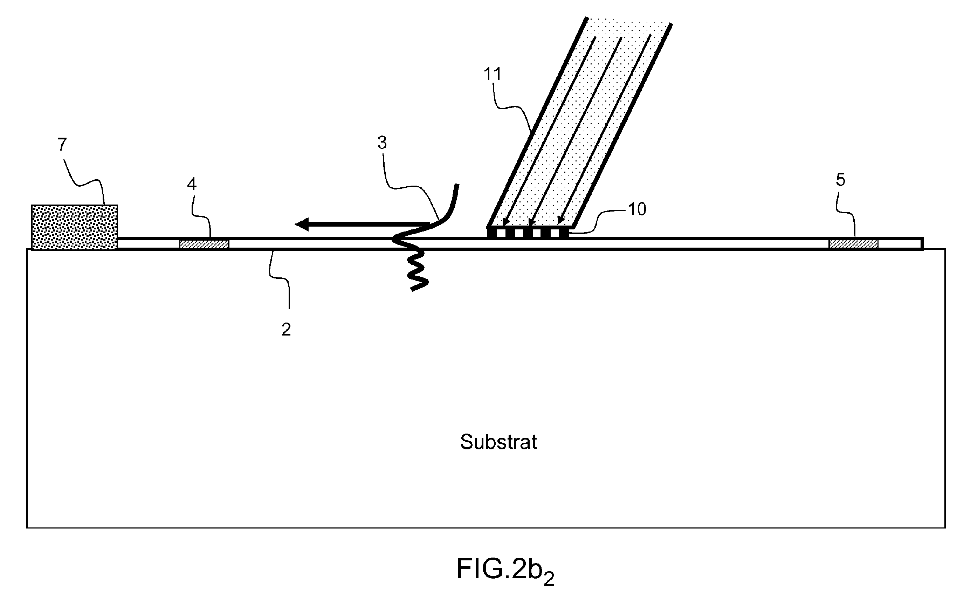

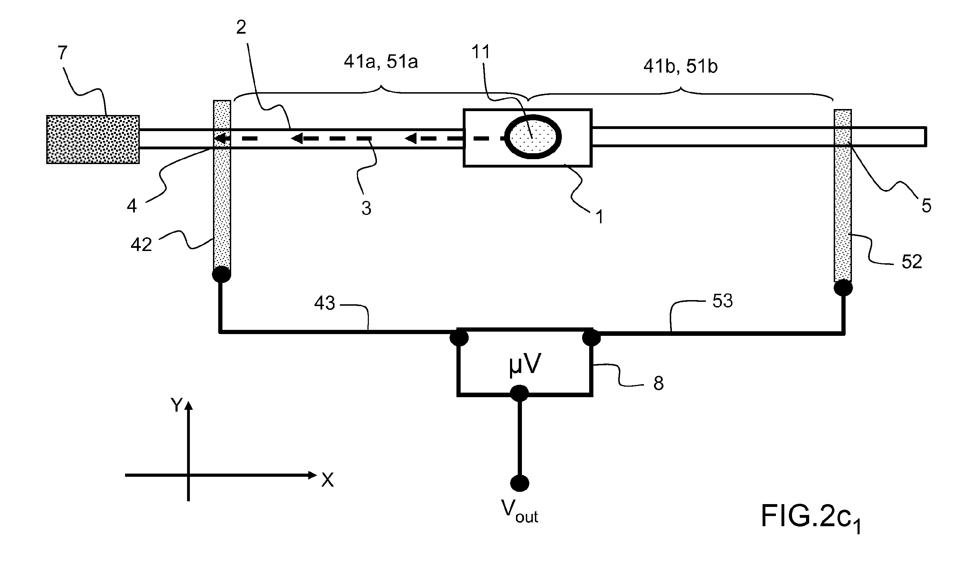

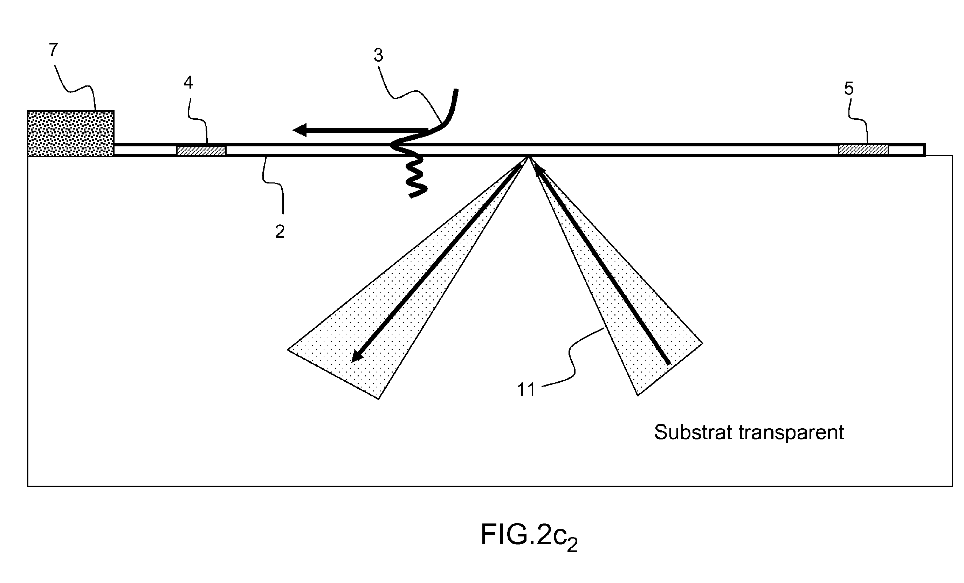

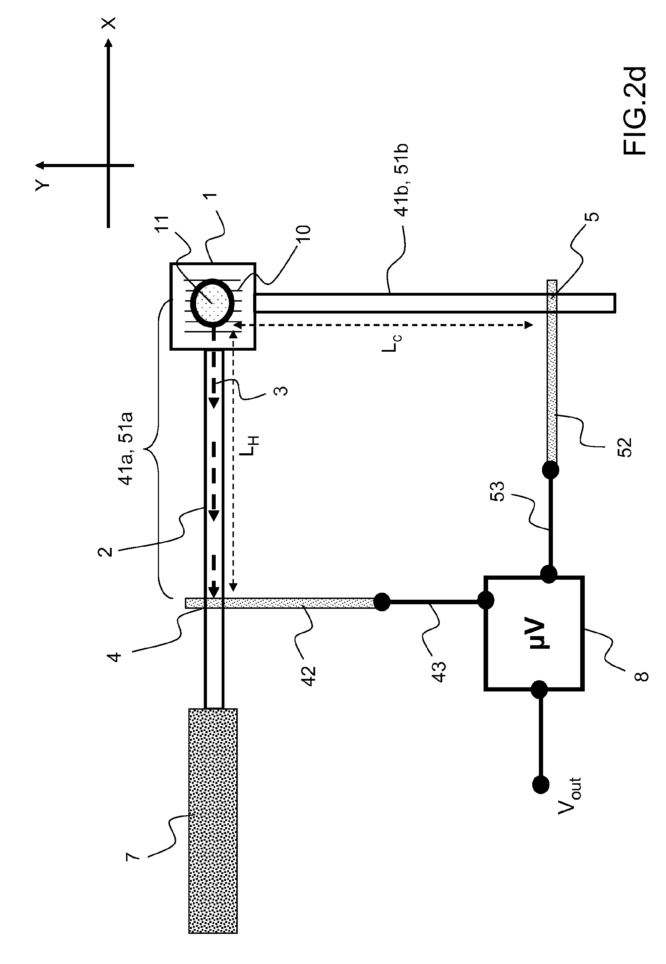

Selon un deuxième mode de réalisation de cette variante décrit en relation avec les figures 2b, 2c et 2d, on peut s'affranchir du circuit 6 intégré de traitement des tensions $U_h$ et $U_c$. Pour cela, il faut que la différence de potentiel entre les électrodes 42 et 52 soit nulle dès lors que l'échauffement du guide est purement non-résonant. Le dispositif de mesure comporte un seul dispositif de détection des tensions faibles 8 permettant de mesurer les tensions $U_h$ et $U_c$ aux bornes des jonctions thermocouple chaude 4 et froide 5, plus précisément aux bornes des électrodes 42 et 52 ; il ne comporte plus de circuit 6 d'ajustement des tensions. Sans nuire à la généralité, on suppose dans ces exemples que les jonctions thermocouple chaude et froide sont obtenues à partir d'électrodes 42 et 52 de même nature (= de même matériau B).

Dans ce cas on mesure une tension thermocouple aux bornes des électrodes 42, 52 de même nature ; cette tension U est en fait la tension $U=U_h-U_c$. Lors de la phase d'initialisation (excitation non-résonante avec une polarisation TE, qui diffuse sa chaleur le long de l'électrode commune 41, 51 en direction des deux thermo jonctions chaude 4 et froide 5) le spot d'excitation 11 est initialement dans une position selon X telle que $U_h=aP_{nr}$ et $U_c=bP_{nr}$ où a et b sont des coefficients a priori différents. La phase de centrage du spot 11 permet précisément d'ajuster les coefficients a et b de telle sorte qu'ils soient égaux. On note que dès lors que le spot 11 est centré selon la direction X entre les deux jonctions 4 et 5, l'égalité des coefficients a et b est vraie quelle que soit la puissance non-résonance incidente de sorte que dans ces cas de figures particuliers il n'est pas nécessaire de considérer une plage de puissances non-résonantes incidentes.

Dès lors que cet ajustement du spot est réalisé, on passe à la deuxième étape en changeant la polarisation incidente de telle sorte que l'excitation du mode plasmon soit effective. Dans ce cas on a : $U_h-U_c=U_{hspp}+aU_{hnr}$ - ($Ucs$-$pp+aUcnr$)= $U_{hspp}-U_{cspp}$ qui est une quantité caractéristique du mode plasmon guidé.

Les exemples des figures 2b et 2c diffèrent uniquement par leur élément excitateur 1.

Dans l'exemple de la figure 2b, le mode guidé 3 est excité par illumination 11 en incidence oblique d'un micro-réseau 10 dont les traits selon Y sont perpendiculaires à l'axe longitudinal du guide 2. L'incidence oblique, permet une excitation unidirectionnelle du mode plasmon guidé 3.

Dans l'exemple de la figure 2c, le mode guidé 3 est excité par illumination 10 en incidence dans la configuration Kretschmann-Raether (Illumination en incidence sur-critique au travers d'un substrat transparent avec réflexion à l'interface entre le substrat et le guide 2 ; il n'y a pas de micro-réseau). L'incidence oblique permet une excitation unidirectionnelle du mode plasmon guidé 3.

Dans l'exemple de la figure 2d, le mode guidé 3 est excité par illumination 11 en incidence normale d'un micro-réseau 10 dont les traits selon Y sont perpendiculaires à l'axe longitudinal du guide. Dans ce cas, il ne peut pas y avoir d'excitation uni-directionnelle du mode guidé plasmon 3 (c'est-à-dire seulement vers la jonction chaude 4) ; la jonction froide ne peut donc pas être disposée dans l'alignement (selon la direction X) du guide plasmonique. Au contraire dans ce cas la jonction thermocouple froide 5 est disposée selon une direction dans laquelle le micro réseau 10 n'a aucune efficacité de couplage, par exemple à 90° de l'axe de propagation du guide plasmonique 2 de sorte que le mode plasmon ne puisse pas se propager dans cette direction. La procédure de mesure est alors la suivante. La polarisation est fixée TE c'est-à-dire dans ce cas parallèle aux traits du réseau, et la position en X et Y du spot incident 11 est ajustée de telle sorte que le signal $V_{out}$ fourni par le dispositif 8 de mesure des faibles tensions soit nul. Cet ajustement est optimum si les jonctions chaude 4 et froide 5 sont situées à des distances $L_C$ et $L_H$ identiques par rapport au micro-réseau 10. Une fois que l'ajustement du spot incident 11 est réalisé, la polarisation peut être orientée perpendiculairement aux traits du réseau provoquant ainsi l'excitation du mode plasmon guidé 3. Dans ces conditions, et moyennant l'ajustement de la position du spot décrite ci-dessus, le signal $V_{out}$ est caractéristique de la puissance plasmon guidée.

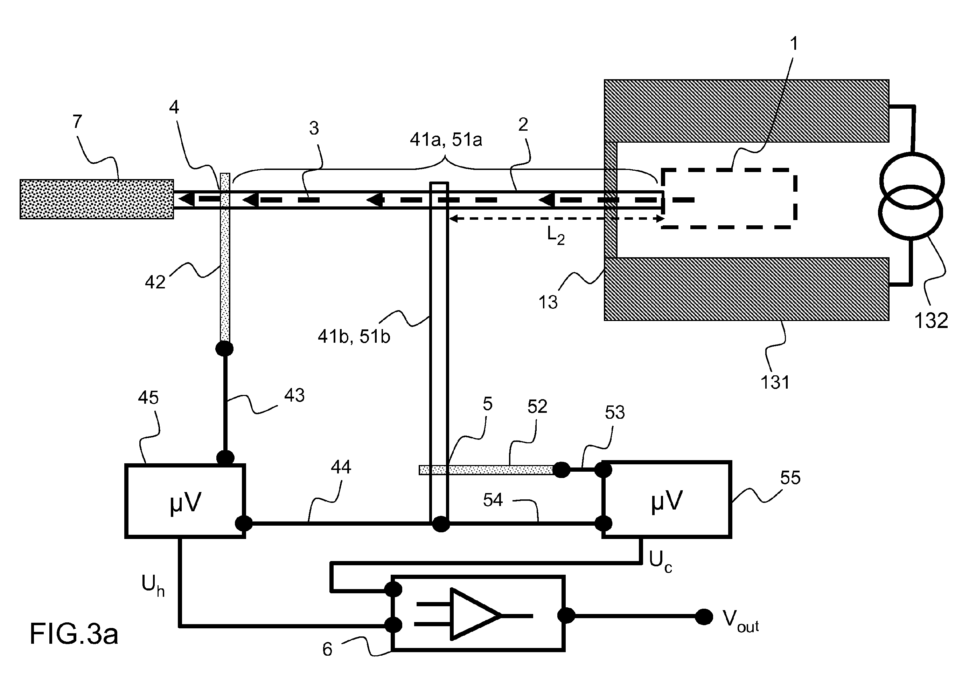

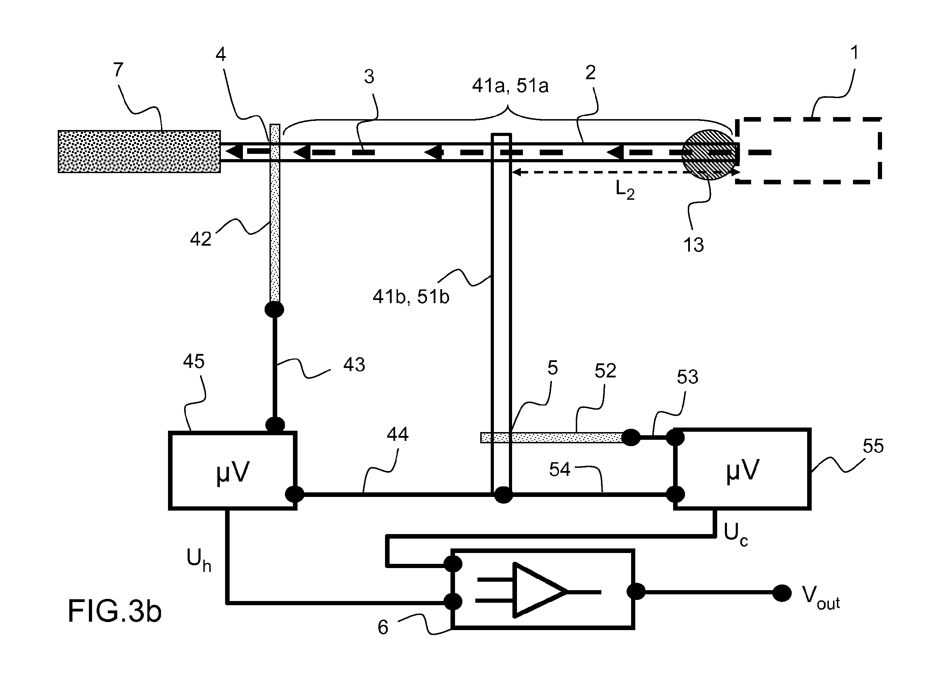

Selon une deuxième variante, la polarisation de la source d'excitation ne peut pas être ajustée de sorte à interdire l'excitation du mode plasmon. La procédure de mesure précédemment décrite en relation avec les figures 2a, 2b, 2c et 2d ne peut pas être appliquée puisqu'on ne peut pas avoir une excitation du guide plasmonique qui ne provoque qu'un échauffement non-résonant. Dans ce cas, on ajoute au composant décrit en relation avec la figure 2a, un dispositif 13 de chauffage local du guide permettant de simuler un échauffement non-résonant. Le dispositif chauffant peut être de diverse nature : il peut s'agir d'un élément Pelletier, d'un simple ruban métallique de largeur micronique comme montré figure 3a ou même d'un faisceau de lumière incidente focalisé issu par exemple d'une diode laser comme montré figure 3b.

La procédure de mesure utilisant la configuration de la figure 3a est très similaire à celle de la figure 2a. Ici, on remplace l'étape d'échauffement non-résonant par une étape d'échauffement du guide réalisée à l'aide du dispositif chauffant 13 électrique qui comporte une source de courant 132 qui permet d'exciter l'élément chauffant 131. Ainsi pour des intensités données traversant l'élément chauffant 131, les paramètres du circuit intégré 6 sont ajustés de telle sorte que le signal de sortie $V_{out}$ soit nul. Dès que cette phase d'ajustement est réalisée, le guide plasmonique 2 peut être excité, l'élément de chauffage 13 étant à l'arrêt. Le signal $V_{out}$ mesuré dans ce cas est alors caractéristique de la puissance plasmon guidée.

Dans le cas de la figure 3b, le dispositif chauffant électrique de la figure 3a est remplacé par un spot de lumière incidente focalisé 13. Ce spot doit être positionné à l'entrée du guide plasmonique 2 afin de produire un échauffement non-résonant permettant l'ajustement des paramètres du circuit intégré 6.

Ces configurations (figs. 3a et 3b) sont d'autant plus performantes que les tensions $U_{hspp}$ et $U_{cspp}$ sont aussi différentes que possible. Ceci se produit à la condition que $L_2$ soit aussi faible que possible.

Le composant selon l'invention est adapté à un type de guides plasmoniques dit guides à ruban, montrés figure $2e_2$ qu'il s'agisse du :

-   guide d'onde de plasmon de surface (SPPW acronyme de l'expression anglo-saxonne « Surface Plasmon Polariton Waveguide », présenté dans la publication de J.C. Weeber et al, Phys. Rev. B, 64, 045411, (2001)), obtenu par le dépôt d'un mince ruban métallique sur un substrat non métallique. Le substrat possède un indice de réfraction différent du superstrat à la longueur d'onde du mode du SPPW. L'épaisseur E, la largeur (La) et la longueur (Lo) du ruban sont tels que E<<La<<Lo. La forme du circuit dessiné par le ruban est déterminée par le contexte de l'application. Les dimensions sont ajustées de façon à supporter un mode plasmon à la longueur d'onde définie par le contexte de l'application. La section du guide plasmonique peut-être trapézoïdale ou rectangulaire. La longueur de propagation le long du ruban est de l'ordre 100 $\mu$m pour l'IR.

- nanofil (nanowire) à plasmon qui correspond à un fil métallique déposé sur un substrat, présenté dans la publication de J.C. Weeber, et al Phys. Rev. B, 9061, (1999). Cette configuration se distingue du guide SPPW en ce que son épaisseur hors tout (EHT) et sa largeur hors tout (LHT) sont du même ordre de grandeur (EHT~LHT). Le terme nanofil distingue cette configuration d'un fil métallique conventionnel en ce que la forme de la section du fil et les dimensions qui définissent cette forme sont telles que le fil supporte un mode de plasmon de surface pour une longueur d'onde d'une excitation électromagnétique (optique) pertinente dans le contexte d'une application. Typiquement, ces dimensions sont inférieures au micromètre. Le substrat possède un indice de réfraction différent du superstrat à la longueur d'onde du mode du nanofil.

- du canal à plasmon polariton de surface (CSPP acronyme de l'expression anglo-saxonne « Channel Surface Plasmon Polariton », , présenté dans la publication de S.I. Bozhevolnyi, Nature, 440, 508-511, Nov 2005), qui correspond à un canal gravé dans un support métallique. Ce support métallique peut être un substrat métallique massif, un film mince métallique déposé sur un substrat ou un guide d'onde ruban en métal tel que décrit pour le guide SPPW. Le substrat possède un indice de réfraction différent du superstrat à la longueur d'onde du mode du CSPP.

- du guide d'onde plasmonique chargé par un diélectrique (DLSPPW acronyme de l'expression anglo-saxonne « Dielectric Loaded Surface Plasmon Waveguide ») qui correspond au SPPW à laquelle s'ajoute un guide d'onde diélectrique déposé sur le ruban métallique. La largeur du guide d'onde diélectrique est inférieure à celle du ruban qui le supporte. Le substrat possède un indice de réfraction différent du superstrat à la longueur d'onde du mode du DLSPPW. Les sections du guide diélectrique et du guide plasmonique sont trapézoïdales ou rectangulaires.

- Du guide de plasmon de surface à longue portée (LR-SPPW acronyme de l'expression anglo-saxonne « Long Range Surface Plasmon Polariton Waveguide») qui correspond au SPPW modifiée en ce que les indices de réfraction du substrat et du superstrat sont égaux à la longueur d'onde du mode de plasmon de surface qui se propage alors beaucoup plus loin que pour le SPPW ; la longueur de propagation le long du ruban est de l'ordre 1 à 2 mm pour l'IR.

- Du nanofil à longue portée (LR-nanofil) qui correspond au nanofil modifié en ce que les indices de réfraction du substrat et du superstrat sont égaux à la longueur d'onde du mode de plasmon de surface qui se propage alors beaucoup plus loin que pour le nanofil.

- Du guide d'onde « slot » qui correspond à une tranchée taillée dans un film métallique, les indices de réfraction du substrat, du superstrat et de l'espace situé entre les deux murs métalliques pouvant être identiques ou différents.

- Du guide LR-DLSPPW acronyme de l'expression anglo-saxonne « Long Range Dielectric Loaded Surface Plasmon Polariton Waveguide » qui correspond à une couche diélectrique d'indice de réfraction $n_2$ déposée sur un substrat d'indice de réfraction $n_2 < n_1$. Sur la couche d'indice $n_2$ sont successivement déposés un ruban métallique mince faisant office de guide plasmonique puis un second guide d'onde diélectrique d'indice $n_3$. Les sections des différents guides sont trapézoïdales ou rectangulaires. La longueur de propagation le long du ruban est de l'ordre 1 à 2 mm pour l'IR.

Un composant selon l'invention a été réalisé selon l'exemple des figures $2c_1$ et $2c_2$ à partir d'un substrat de verre transparent déposé sur l'hypoténuse d'un prisme droit et connecté à ce prisme par le biais d'un liquide assurant la continuité de l'indice de réfraction entre le substrat et le prisme. Le guide plasmonique (= partie 41 a, 51 a) et la partie 41 b (ou 51 b) de l'électrode sous forme d'un ruban d'or qui a une épaisseur de 65 nm et une largeur de 3 $\mu$m, et les autres électrodes 42, 52 sous forme de rubans de nickel avec une épaisseur de 38 nm et une largeur de 2 $\mu$m ont été lithographiés sur la face supérieure du substrat en contact avec l'air. L'électrode d'or comprend une zone centrale élargie (désignée dans la suite zone de lancement) sur laquelle sera focalisé le faisceau 11. Les zones où l'électrode d'or 41, 51 recouvre les électrodes de nickel 42, 52 constituent les jonctions thermocouple 4, 5 dont le pouvoir thermo-électrique est estimé à 22 $\mu$V K$^{-1}$ d'après les valeurs tabulées des coefficients Seebeck de l'or et du nickel.

Le faisceau focalisé 11 dont la fréquence correspond à une longueur d'onde dans le vide de 800nm est obtenu à l'aide d'une fibre optique lentillée.

Un dispositif comprenant un polariseur et une lame demi-onde permet de contrôler la polarisation du faisceau incident.

Le faisceau incident 11 étant focalisé sur la zone de lancement, pour une polarisation TM (transverse magnétique) du faisceau incident (c'est-à-dire une polarisation linéaire parallèle au plan d'incidence), un mode plasmon confiné à l'interface entre l'or et l'air peut être excité à la condition que l'angle d'incidence moyen du faisceau soit proche de l'angle critique de réflexion totale interne de l'interface verre/air. L'incidence oblique du faisceau n'autorise qu'une excitation uni-directionnelle du mode plasmon (de la droite vers la gauche comme montré sur les figures $2c_1$ et $2c_2$). Le mode plasmon excité sur la zone de lancement se couple au mode plasmon guidé 3 supporté par le ruban d'or 2 et se propage comme indiqué ci-dessus de la droite vers la gauche. Il en résulte que les jonctions thermocouple désignent respectivement les jonctions thermocouple « chaude » 4 et « froide » 5. Les électrodes de nickel 42, 52 sont contactées électriquement à l'aide de micro-pointes 43, 53 connectées à un amplificateur différentiel 8 qui permet de mesurer les tensions aux bornes des électrodes 42, 52 des différentes jonctions thermocouple 4 et 5.

La procédure utilisée pour opérer une mesure relative de la puissance plasmon se propageant le long de l'électrode d'or 41 est la suivante. L'angle d'incidence du faisceau 11 est tout d'abord ajusté de telle sorte que, pour une polarisation incidente TM, le mode plasmon 3 puisse être excité. La polarisation du faisceau incident est alors orientée dans la direction TE (champ électrique perpendiculaire au plan d'incidence) et la tension thermocouple est mesurée aux bornes des deux électrodes de nickel 42, 52. Cette tension est désignée par $V_{Ni-Ni}$ dans la suite. Pour une position longitudinale (c'est-à-dire le long de l'axe X de l'électrode d'or) quelconque du faisceau incident 11, la tension $V_{Ni-Ni}$ est a priori non nulle. En effet dans un tel cas, l'échauffement du système résultant de l'absorption par la couche d'or d'une fraction de la lumière incidente produit des températures différentes aux points 4 et 5 et par conséquent une valeur de tension $V_{Ni-Ni}$ non nulle. Les jonctions thermocouple chaude 4 et froide 5 ayant été disposées à égale distance du centre de la zone de lancement, il est toutefois possible d'annuler la tension $V_{Ni-Ni}$ mesurée en polarisation TE en centrant le spot incident 11 par rapport aux deux jonctions thermocouple 4 et 5. La polarisation TE ne donnant lieu qu'à une absorption non-résonante de la lumière incidente, le centrage longitudinal du spot incident permet donc d'éliminer la contribution à $V_{Ni-Ni}$ de l'échauffement « non-résonant » et ceci quelle que soit la puissance non-résonante absorbée. La mesure relative de la puissance plasmon se propageant le long du guide est alors obtenue en orientant la polarisation incidente selon la direction TM. Pour cet état de polarisation, le mode plasmon excité se propage en direction de l'électrode chaude. Au cours de sa propagation, ce mode est progressivement absorbé donnant lieu à une distribution de température non-symétrique par rapport au centre de la zone de lancement. Cette dissymétrie est à l'origine d'une valeur de tension $V_{Ni-Ni}$ non-nulle. Sur la base de cette analyse on peut donc conclure qu'à l'issue de la procédure d'initialisation consistant ici en un ajustement de la position longitudinale du spot incident, la tension $V_{Ni-Ni}$ mesurée en polarisation TM est caractéristique de la puissance couplée dans le mode plasmon. Le but des expériences qui suivent est d'étayer cette conclusion.

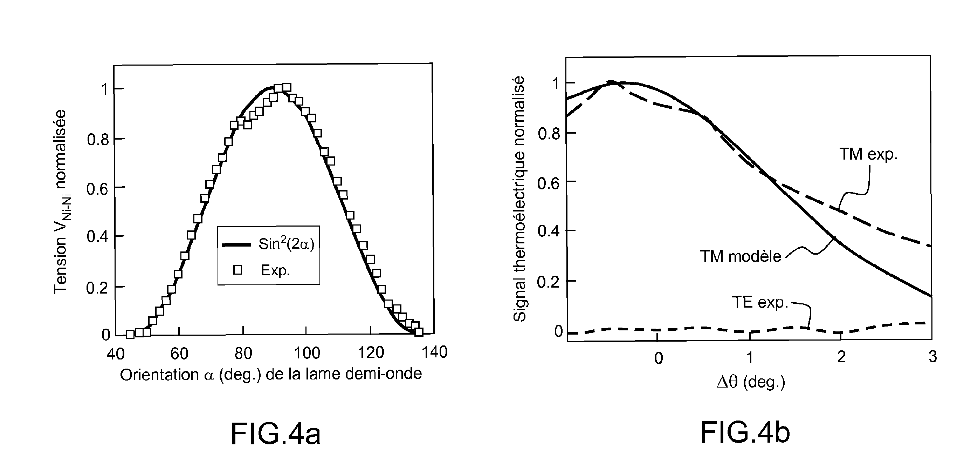

La figure 4a montre l'évolution de la tension $V_{Ni-Ni}$ (mesurée après la procédure de centrage du spot décrite ci-dessus) en fonction de la polarisation incidente contrôlée par l'angle $\alpha$ de la lame demi-onde. Pour $\alpha=45°$ et $\alpha=135°$, la polarisation incidente est TE et la tension $V_{Ni-Ni}$ est nulle comme attendu à l'issue de la procédure de centrage longitudinal du spot incident. Lors du passage de la polarisation TE à la polarisation TM (correspondant à $\alpha=90°$), on note que la tension $V_{Ni-Ni}$ suit la loi de Malus ce qui prouve que cette tension est proportionnelle à l'intensité de la composante du champ électrique incident permettant d'exciter le mode plasmon. Ainsi, $V_{Ni-Ni}$ apparaît donc bien caractéristique de la puissance couplée dans le mode plasmon.

Dans le but de compléter cette première observation, on considère sur la figure 4b l'évolution de la tension $V_{Ni-Ni}$ en fonction de l'angle d'incidence. Dans le cas de la polarisation TE, la tension $V_{Ni-Ni}$ est nulle pour tout angle. Pour la polarisation TM, la tension $V_{Ni-Ni}$ suit une évolution comparable à celle de la puissance couplée dans le mode plasmon calculée numériquement. Cette seconde observation confirme donc la conclusion selon laquelle la tension $V_{Ni-Ni}$ est proportionnelle à la puissance couplée dans le mode plasmon.

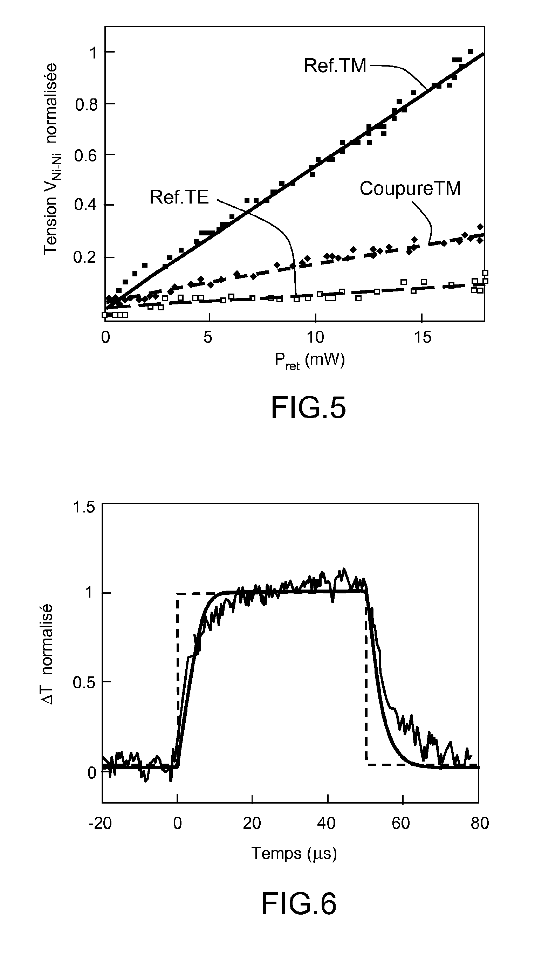

Dans le but de parfaire la démonstration, on considère sur la figure 5, l'évolution de la tension $V_{Ni-Ni}$ obtenue après la procédure de centrage du spot en fonction de la puissance réfléchie (mesurée à l'aide d'un photodétecteur placé sur le trajet du rayon réfléchi par le substrat de la figure 2C$_2$).

La puissance réfléchie $P_{ret}$ est proportionnelle à la puissance incidente. Pour un spot incident 11 dont les caractéristiques (angle d'incidence, taille de spot, divergence angulaire du faisceau ...) sont fixées, la puissance couplée dans le mode plasmon est proportionnelle à la puissance incidente et donc à la puissance réfléchie.

On considère tout d'abord un guide plasmonique 2 présentant une largeur constante. Pour une polarisation incidente TE la tension $V_{Ni-Ni}$ reste proche de zéro en dépit du fait que l'absorption du spot incident produit un fort échauffement non-résonant du système comme en atteste une dégradation du film d'or au niveau de la position du spot incident, observée pour des puissances réfléchies dépassant 25mW. Dans le cas d'une polarisation incidente TM, la tension $V_{Ni-Ni}$ croît proportionnellement à la puissance réfléchie et donc à la puissance couplée dans le mode plasmon. Ce rapport de proportionnalité permet donc bien de réaliser une mesure relative de la puissance couplée dans le mode plasmon.

On considère à présent un guide qui présente une zone de l'électrode 41 a, 51 a, dont la largeur a été réduite à 500nm sous la largeur de coupure du mode plasmon se propageant le long du ruban d'or. Dans ces conditions, le mode plasmon excité sur la zone de lancement ne peut se coupler au mode plasmon de ruban et diffracte à la transition entre la zone de lancement et le ruban aminci. Pour cette configuration, et pour une puissance réfléchie donnée, on constate que la tension $V_{Ni-Ni}$ est de l'ordre de 25% de la tension mesurée dans le cas du guide de référence. En l'absence de mode plasmon le long du ruban d'or, on observe donc une forte diminution de la tension $V_{Ni-Ni}$. Toutefois, en présence du guide aminci, cette tension n'est pas nulle. Ceci tient au fait que l'excitation d'un mode plasmon sur la zone de lancement contribue à la tension thermocouple par le biais de la diffusion de la chaleur le long du ruban d'or aminci. Ainsi, le coefficient de proportionnalité entre la puissance couplée dans le mode plasmon et la tension $V_{Ni-Ni}$ est fonction des caractéristiques opto-géométriques de l'électrode 41 a, 51 a des jonctions thermocouple qui joue le rôle de guide plasmonique ou de façon équivalente des caractéristiques du mode plasmon (en particulier sa distance d'amortissement) se propageant le long de cette électrode.

On a considéré jusqu'à présent un état stationnaire du composant obtenu par l'excitation en continu du mode plasmon. Ce mode d'excitation ne permet pas de caractériser le temps de réponse de la détection thermoélectrique. Dans le but de pallier cette limitation, on peut intégrer un modulateur électro-optique au composant expérimental des figures 2c. Ce dispositif permet d'exciter le mode plasmon à l'aide d'un pulse laser d'une durée contrôlée.

Pour une impulsion d'une durée de $50\mu s$ montré figure 6, on observe un temps de montée du signal thermoélectrique de $10\mu s$ et un temps de descente de $12\mu s$ en bon accord avec la simulation du temps de réponse du composant. Ces temps de réponse indiquent une fréquence de coupure de la réponse thermoélectrique de l'ordre de 50 kHz très supérieure à celle de la détection thermo-résistive des modes plasmon (600Hz).

En résumé, nous avons montré que pour une configuration correspondant aux figures $2c_1$ et $2c_2$, la mesure différentielle de la tension aux bornes des jonctions chaude et froide permet d'obtenir un signal proportionnel à la puissance couplée dans le mode plasmon. Ce résultat ne s'obtient toutefois qu'à la condition d'avoir au préalable ajusté la position longitudinale du spot incident de telle sorte à éliminer la contribution à la tension $V_{Ni-Ni}$ de l'échauffement non-résonant du système. Ce centrage longitudinal du spot constitue une adaptation de la procédure d'initialisation décrite précédemment dans le cas particulier du composant des figures $2c_1$ et $2c_2$.

**Revendications**

1.  Composant thermo électrique qui comprend intégrés au composant :

    - un guide d'onde plasmonique (2),
    - un élément excitateur (1) du mode plasmonique guidé,
    - un dispositif de mesure de la puissance dissipée lors de la propagation le long du guide d'onde plasmonique (2) **caractérisé en ce que** le dispositif de mesure comporte associée au guide plasmonique (2), une jonction thermocouple (4) à deux électrodes (41, 42), l'une des électrodes (41) incluant le guide d'onde plasmonique (2).

2.  Composant thermoélectrique selon la revendication précédente, **caractérisé en ce que** le guide plasmonique (2) est un résonateur en anneau, et **en ce que** l'élément excitateur (1) est un guide d'onde plasmonique ou un guide d'onde conventionnel.

3.  Composant thermo électrique selon la revendication 1, **caractérisé en ce qu'**il comprend un deuxième guide plasmonique (2') et une deuxième jonction thermocouple (4') à deux électrodes (41', 42'), l'une des électrodes (41') de cette deuxième jonction incluant le deuxième guide d'onde plasmonique (2'), le premier guide plasmonique étant disposé sur une branche d'une jonction Y, le deuxième guide plasmonique étant disposé sur l'autre branche de la jonction Y.

4.  Composant thermoélectrique selon la revendication 1, **caractérisé en ce qu'**il comporte une deuxième jonction thermocouple (5) à deux électrodes (51, 52), associée au guide plasmonique (2), l'une de ces électrodes (41 ou 51) étant commune à la première jonction thermocouple (4) et incluant le guide d'onde plasmonique (2), la première jonction (4) dite jonction chaude étant destinée à être sur le trajet du mode guidé plasmonique (3), la deuxième jonction (5) dite jonction froide étant située en dehors du trajet du mode guidé plasmonique (3).

5.  Composant thermoélectrique selon l'une des revendications précédentes, **caractérisé en ce qu'**il comprend un composant optique (7) excité par le guide plasmonique.

6.  Composant thermoélectrique selon l'une des revendications précédentes, **caractérisé en ce que** l'électrode (41, 51) incluant le guide plasmonique est métallique.

7.  Composant thermo électrique selon l'une des revendications 4 à 6, **caractérisé en ce que** l'élément excitateur (1) du mode guidé comprend des moyens de contrôle de sa polarisation.

8.  Composant thermo électrique selon la revendication 7, **caractérisé en ce que** l'élément excitateur (1) du mode guidé est un guide d'entrée plasmonique ou conventionnel, couplé au guide plasmonique (2) par couplage de type « butt-coupling » ou par couplage directionnel dans le plan, ou par couplage directionnel directionnel vertical, le guide d'onde excitateur étant enterré dans un substrat.

9.  Composant thermo électrique selon la revendication 7, **caractérisé en ce que** l'élément excitateur (1) du mode guidé est un micro réseau de diffraction (10) dont les traits sont perpendiculaires à l'axe longitudinal du guide, destiné à être couplé à un faisceau laser (11) en incidence oblique unidirectionnelle sur le micro réseau de diffraction.

**10.** Composant thermo électrique selon la revendication précédente, **caractérisé en ce que** le micro réseau de diffraction (10) est situé sur le guide plasmonique (2) à égale distance des jonctions thermocouples chaude (4) et froide (5), et **en ce que** le dispositif de mesure ne comporte qu'un seul dispositif de détection (8) de faible différences de potentiel.

**11.** Composant thermo électrique selon la revendication 7, **caractérisé en ce que** l'élément excitateur (1) du mode guidé est à une extrémité du guide plasmonique (2) et est un micro réseau de diffraction (10) dont les traits sont perpendiculaires à l'axe longitudinal du guide (2) et destiné à être couplé à un faisceau laser focalisé (11), en incidence normale sur le micro réseau de diffraction, la partie de l'électrode commune n'incluant pas le guide plasmonique (41 b, 51 b) étant disposée selon une direction dans laquelle le micro réseau n'a aucune efficacité de couplage.

**12.** Composant thermo électrique selon la revendication 7, **caractérisé en ce que** l'élément excitateur (1) du mode guidé est un faisceau laser focalisé (11) en incidence oblique sur-critique à travers un substrat transparent.

**13.** Composant thermo électrique selon l'une des revendications 1 à 6, **caractérisé en ce que** l'élément excitateur (1) du mode guidé ne comprend pas de moyens de contrôle de sa polarisation.

**14.** Composant thermo électrique selon la revendication précédente, **caractérisé en ce qu'**il comprend un dispositif chauffant (13) situé à l'entrée du guide plasmonique.

**15.** Composant thermo électrique selon la revendication précédente, **caractérisé en ce que** le dispositif chauffant (13) comporte un élément Pelletier, ou un ruban métallique de largeur micronique ou un faisceau de lumière incidente focalisé.

**16.** Composant thermo électrique selon l'une des revendications précédentes prise en combinaison avec la revendication 4, **caractérisé en ce que** le dispositif de mesure de puissance comporte un dispositif de détection de différences de potentiel (45, 55) par jonction thermocouple et relié à ces deux dispositifs, un circuit (6) de traitement des différences de potentiel obtenues.

**17.** Composant thermo électrique selon l'une des revendications précédentes, **caractérisé en ce que** l'élément excitateur (1) comporte des moyens de modulation.

**18.** Procédé d'utilisation d'un composant thermo électrique selon l'une des revendications précédentes prise en combinaison avec la revendication 4, **caractérisé en ce qu'**il comprend une étape d'initialisation du dispositif de mesure par un échauffement non résonant du guide plasmonique (2).

**19.** Procédé d'utilisation d'un composant thermoélectrique selon la revendication précédente, **caractérisé en ce qu'**il comporte suite à l'étape d'initialisation, une étape d'excitation du mode guidé (3) dans le guide plasmonique (2).

**20.** Procédé d'utilisation d'un composant thermoélectrique selon l'une des revendications 18 à 19, **caractérisé en ce qu'**il comporte entre l'étape d'initialisation et l'étape d'excitation, une étape de calibration du dispositif de mesure.

**21.** Procédé d'utilisation d'un composant thermoélectrique selon l'une des revendications 18 à 20, **caractérisé en ce que** l'étape d'initialisation est réalisée dans une plage de températures déterminée, et **en ce que** l'étape de d'excitation du mode guidé est réalisée pour une température comprise dans ladite plage de températures.

**Patentansprüche**

**1.** Thermoelektrische Komponente, die in die Komponente integriert Folgendes umfasst:

    - einen plasmonischen Wellenleiter (2);
    - ein Erregerelement (1) des geführten plasmonischen Modus;
    - eine Vorrichtung zum Messen der bei der Ausbreitung entlang dem plasmonischen Wellenleiter (2) gestreuten Leistung,

**dadurch gekennzeichnet, dass** die Messvorrichtung, mit dem plasmonischen Leiter (2) assoziiert, eine Thermoelementverbindung (4) mit zwei Elektroden (41, 42) umfasst, wobei eine der Elektroden (41) den plasmonischen Wellenleiter (2) beinhaltet.

2. Thermoelektrische Komponente nach dem vorherigen Anspruch, **dadurch gekennzeichnet, dass** der plasmonische Leiter (2) ein Ringresonator ist, und dadurch, dass das Erregerelement (1) ein plasmonischer Wellenleiter oder ein herkömmlicher Wellenleiter ist.

3. Thermoelektrische Komponente nach Anspruch 1, **dadurch gekennzeichnet, dass** sie einen zweiten plasmonischen Leiter (2') und eine zweite Thermoelementverbindung (4') mit zwei Elektroden (41', 42') umfasst, wobei eine der Elektroden (41') dieser zweiten Verbindung den zweiten plasmonischen Wellenleiter (2') beinhaltet, wobei der erste plasmonische Leiter auf einem Schenkel einer Y-Verbindung angeordnet ist, wobei der zweite plasmonische Leiter auf dem anderen Schenkel der Y-Verbindung angeordnet ist.

4. Thermoelektrische Komponente nach Anspruch 1, **dadurch gekennzeichnet, dass** sie eine zweite Thermoelementverbindung (5) mit zwei Elektroden (51, 52) umfasst, assoziiert mit dem plasmonischen Leiter (2), wobei eine dieser Elektroden (41 oder 51) mit der ersten Thermoelementverbindung (4) gemeinsam ist und den plasmonischen Wellenleiter (2) aufweist, wobei die erste Verbindung (4), heiße Verbindung genannt, so ausgelegt ist, dass sie sich auf dem Pfad des zweiten geführten plasmonischen Modus (3) befindet, wobei sich die zweite Verbindung (5), kalte Verbindung genannt, außerhalb des Pfades der geführten plasmonischen Modus (3) befindet.

5. Thermoelektrische Komponente nach einem der vorherigen Ansprüche, **dadurch gekennzeichnet, dass** sie eine optische Komponente (7) umfasst, die von dem plasmonischen Leiter erregt wird.

6. Thermoelektrische Komponente nach einem der vorherigen Ansprüche, **dadurch gekennzeichnet, dass** die den plasmonischen Leiter beinhaltende Elektrode (41, 51) aus Metall ist.

7. Thermoelektrische Komponente nach einem der Ansprüche 4 bis 6, **dadurch gekennzeichnet, dass** das Erregerelement (1) für den geführten Modus Mittel zum Steuern seiner Polarisation umfasst.

8. Thermoelektrische Komponente nach Anspruch 7, **dadurch gekennzeichnet, dass** das Erregerelement (1) für den geführten Modus ein plasmonischer oder herkömmlicher Eingangsleiter ist, der mit dem plasmonischen Leiter (2) durch eine Kopplung des "Stoßkopplungs"-Typs oder durch eine direktionale Kopplung in der Ebene oder durch eine vertikale direktionale Kopplung gekoppelt ist, wobei der Erregerwellenleiter in einem Substrat eingebettet ist.

9. Thermoelektrische Komponente nach Anspruch 7, **dadurch gekennzeichnet, dass** das Erregerelement (1) für den geführten Modus ein Mikrobeugungsgitter (10) ist, dessen Linien senkrecht zur Längsachse des Leiters verlaufen und der zum Koppeln mit einem Laserstrahl (11) in unidirektionalem schrägem Einfall auf das Mikrobeugungsgitter bestimmt ist.

10. Thermoelektrische Komponente nach dem vorherigen Anspruch, **dadurch gekennzeichnet, dass** sich das Mikrobeugungsgitter (10) auf dem plasmonischen Leiter (2) im gleichen Abstand von der heißen (4) und der kalten (5) Thermoelementverbindung befindet, und dadurch, dass die Meßvorrichtung nur eine einzige Vorrichtung (8) zum Erkennen von geringen Potentialdifferenzen umfasst.

11. Thermoelektrische Komponente nach Anspruch 7, **dadurch gekennzeichnet, dass** sich das Erregerelement (1) für den geführten Modus an einem Ende des plasmonischen Leiters (2) befindet und ein Mikrobeugungsgitter (10) ist, dessen Linien senkrecht zur Längsachse des Leiters (2) sind und der zum Koppeln mit einem fokussierten Laserstrahl (11) bei normalem Einfall auf das Mikrobeugungsgitter bestimmt ist, wobei der Teil der gemeinsamen Elektrode, der den plasmonischen Leiter (41b, 51b) nicht beinhaltet, in einer Richtung angeordnet ist, in der das Mikrogitter keinen Kopplungseffekt hat.

12. Thermoelektrische Komponente nach Anspruch 7, **dadurch gekennzeichnet, dass** das Erregerelement (1) für den geführten Modus ein fokussierter Laserstrahl (11) in superkritischem schrägem Einfall durch ein transparentes Substrat ist.

13. Thermoelektrische Komponente nach einem der Ansprüche 1 bis 6, **dadurch gekennzeichnet, dass** das Erregerelement (1) für den geführten Modus kein Mittel zum Steuern seiner Polarisation umfasst.

**14.** Thermoelektrische Komponente nach dem vorherigen Anspruch, **dadurch gekennzeichnet, dass** sie eine Heizvorrichtung (13) umfasst, die sich am Eingang des plasmonischen Leiters befindet.

**15.** Thermoelektrische Komponente nach dem vorherigen Anspruch, **dadurch gekennzeichnet, dass** die Heizvorrichtung (13) ein Pelletier-Element oder einen Metallstreifen mit Mikronbreite oder einen fokussierten Einfallslichtstrahl umfasst.

**16.** Thermoelektrische Komponente nach einem der vorherigen Ansprüche in Kombination mit Anspruch 4, **dadurch gekennzeichnet, dass** die Leistungsmessvorrichtung eine Vorrichtung (45, 55) zum Erkennen von Potentialdifferenzen per Thermoelementverbindung und, verbunden mit diesen beiden Vorrichtungen, eine Schaltung (6) zum Verarbeiten von erhaltenen Potentialdifferenzen umfasst.

**17.** Thermoelektrische Komponente nach einem der vorherigen Ansprüche, **dadurch gekennzeichnet, dass** das Erregerelement (1) Modulationsmittel umfasst.

**18.** Verfahren zur Verwendung einer thermoelektrischen Komponente nach einem der vorherigen Ansprüche in Kombination mit Anspruch 4, **dadurch gekennzeichnet, dass** sie einen Schritt des Initialisierens der Messvorrichtung durch nichtresonante Erhitzung des plasmonischen Leiters (2) beinhaltet.

**19.** Verfahren zur Verwendung einer thermoelektrischen Komponente nach dem vorherigen Anspruch, **dadurch gekennzeichnet, dass** sie nach dem Initialisierungsschritt einen Schritt des Erregens des geführten Modus (3) in dem plasmonischen Leiter (2) beinhaltet.

**20.** Verfahren zur Verwendung einer thermoelektrischen Komponente nach einem der Ansprüche 18 bis 19, **dadurch gekennzeichnet, dass** es zwischen dem Initialisierungsschritt und dem Erregungsschritt einen Schritt des Kalibrierens der Messvorrichtung beinhaltet.

**21.** Verfahren zur Verwendung einer thermoelektrischen Komponente nach einem der Ansprüche 18 bis 20, **dadurch gekennzeichnet, dass** der Initialisierungsschritt über einen vorbestimmten Temperaturbereich durchgeführt wird, und dadurch, dass der Schritt des Erregens des geführten Modus bei einer Temperatur innerhalb des Temperaturbereichs ausgeführt wird.

**Claims**

**1.** A thermoelectric component comprising, integrated into said component:

- a plasmon waveguide (2);
- an exciter element (1) for the guided plasmon mode;
- a device for measuring the power dissipated during propagation along said plasmon waveguide (2), **characterised in that** said measuring device comprises, associated with said plasmon guide (2), a thermocouple junction (4) with two electrodes (41, 42), with one of said electrodes (41) including said plasmon waveguide (2).

**2.** The thermoelectric component according to the preceding claim, **characterised in that** said plasmon guide (2) is a ring resonator and **in that** said exciter element (1) is a plasmon waveguide or a conventional waveguide.

**3.** The thermoelectric component according to claim 1, **characterised in that** it comprises a second plasmon guide (2') and a second thermocouple junction (4') with two electrodes (41', 42'), with one of said electrodes (41') of said second junction including said second plasmon waveguide (2'), with said first plasmon guide being disposed on one branch of a Y-junction and said second plasmon guide being disposed on the other branch of said Y-junction.

**4.** The thermoelectric component according to claim 1, **characterised in that** it comprises a second thermocouple junction (5) with two electrodes (51, 52), associated with said plasmon guide (2), with one of said electrodes (41 or 51) being common to said first thermocouple junction (4) and including said plasmon waveguide (2), said first junction (4), called hot junction, being designed to be on the path of said guided plasmon mode (3), said second junction (5), called cold junction, being located outside of the path of said guided plasmon mode (3).

**5.** The thermoelectric component according to any one of the preceding claims, **characterised in that** it comprises an optical component (7) that is excited by said plasmon guide.

6. The thermoelectric component according to any one of the preceding claims, **characterised in that** said electrode (41, 51) that includes said plasmon guide is metallic.

7. The thermoelectric component according to any one of claims 4 to 6, **characterised in that** said exciter element (1) for said guided mode comprises means for controlling its polarisation.

8. The thermoelectric component according to claim 7, **characterised in that** said exciter element (1) for said guided mode is a plasmon or conventional input guide that is coupled to said plasmon guide (2) by coupling of the "butt-coupling" type or by directional coupling in the plane or by vertical directional coupling, with said exciter waveguide being embedded in a substrate.

9. The thermoelectric component according to claim 7, **characterised in that** said exciter element (1) for said guided mode is a micro-diffraction grating (10), the lines of which are perpendicular to the longitudinal axis of said guide and which is designed to be coupled to a laser beam (11) in unidirectional oblique incidence on the micro-diffraction grating.

10. The thermoelectric component according to the preceding claim, **characterised in that** said micro-diffraction grating (10) is located on said plasmon guide (2) at an equal distance from said hot (4) and cold (5) thermocouple junctions, and **in that** said measuring device comprises only one device (8) for detecting small differences in potential.

11. The thermoelectric component according to claim 7, **characterised in that** said exciter element (1) for said guided mode is at one end of said plasmon guide (2) and is a micro-diffraction grating (10), the lines of which are perpendicular to the longitudinal axis of said guide (2), and is designed to be coupled to a focused laser beam (11) in normal incidence on said micro-diffraction grating, with the part of the common electrode that does not include the plasmon guide (41b, 51b) being disposed in a direction along which the micro-grating has no coupling effect.

12. The thermoelectric component according to claim 7, **characterised in that** said exciter element (1) for said guided mode is a focused laser beam (11) in supercritical oblique incidence through a transparent substrate.

13. The thermoelectric component according to any one of claims 1 to 6, **characterised in that** said exciter element (1) for said guided mode does not comprise means for controlling its polarisation.

14. The thermoelectric component according to the preceding claim, **characterised in that** it comprises a heating device (13) located at the input of said plasmon guide.

15. The thermoelectric component according to the preceding claim, **characterised in that** said heating device (13) comprises a Pelletier element or a metal strip of micronic width or a focused incident light beam.

16. The thermoelectric component according to any one of the preceding claims in combination with claim 4, **characterised in that** said device for measuring power comprises a device (45, 55) for detecting differences in potential per thermocouple junction and, connected to said two devices, a circuit (6) for processing obtained differences in potential.

17. The thermoelectric component according to any one of the preceding claims, **characterised in that** said exciter element (1) comprises modulation means.

18. A method for using a thermoelectric component according to any one of the preceding claims in combination with claim 4, **characterised in that** it comprises a step of initialising said measuring device by non-resonant heating of said plasmon guide (2).

19. The method for using a thermoelectric component according to the preceding claim, **characterised in that** it comprises, following said initialisation step, a step of exciting said guided mode (3) in said plasmon guide (2).

20. The method for using a thermoelectric component according to any one of claims 18 to 19, **characterised in that** it comprises, between said initialisation step and said excitation step, a step of calibrating said measuring device.

21. The method for using a thermoelectric component according to any one of claims 18 to 20, **characterised in that** said initialisation step is carried out over a determined range of temperatures, and **in that** said step of exciting said guided mode is carried out at a temperature that is within said range of temperatures.

FIG.1a

EP 2 525 200 B1

FIG.1b

FIG.1c

EP 2 525 200 B1

FIG.2a

EP 2 525 200 B1

FIG.2b$_1$

FIG.2b$_2$

FIG.2c₁

EP 2 525 200 B1

Substrat transparent

FIG.2c$_2$

FIG.2d

EP 2 525 200 B1

Couplage type "butt-coupling"

Couplage type coupleur directionnel dans le plan

Vue de dessus

Couplage type coupleur directionnel vertical

Vue de profil

FIG.2e$_1$

Guide ruban (SPPW)

Nanofil

Channel Plasmon Polariton (CSPPW)

Guide ruban Long Range (DLSPPW)

Nanofils Long Range (LR-nanofil)

Guide d'ondes slot

Dielectric loaded (DL SPPW)

Long range dielectric loaded (LR-DLSPPW)

Métal

Diélectrique 1

Diélectrique 2

Diélectrique 3

Code couleurs

FIG.2e$_2$

FIG.3a

EP 2 525 200 B1

FIG.3b

EP 2 525 200 B1

FIG.4a

FIG.4b

EP 2 525 200 B1

FIG.5

FIG.6

31

## RÉFÉRENCES CITÉES DANS LA DESCRIPTION

**Documents brevets cités dans la description**

- US 5792667 A

**Littérature non-brevet citée dans la description**

- **A. AKBARI ; P. BERINI.** *Appl. Phys. Lett.,* 2009, vol. 95, 021104
- **S. BOZHEVOLNYI ; T. NIKOLAJSEN ; K. LEOSSON.** Integrated Power monitor for long range surface plasmon polaritons. *Optics Communication,* 2005, vol. 255, 51
- **R. A. INNES ; J. R. SAMBLES.** Simple detection of surface plasmon-polaritons. *Solid State Communications,* 1985, vol. 56, 493
- **J.C. WEEBER et al.** Surface Plasmon Polariton Waveguide. *Phys. Rev. B,* 2001, vol. 64, 045411
- **J.C. WEEBER et al.** *Phys. Rev. B,* 1999, 9061
- **S.I. BOZHEVOLNYI.** Channel Surface Plasmon Polariton. *Nature,* Novembre 2005, vol. 440, 508-511